# EUROPEAN PATENT SPECIFICATION

(11) **EP 3 833 911 B1**
(45) Date of publication and mention of the grant of the patent: **02.03.2022**
(21) Application number: 19746100.7
(22) Date of filing: 05.08.2019
(51) Int. Cl.: F24S 30/425, F16F 15/03

(54) **A SINGLE AXIS SOLAR TRACKER WITH A TORSIONAL VIBRATION DAMPING DEVICE**
EINACHSIGER SONNENVERFOLGER MIT TORSIONSSCHWINGUNGSDÄMPFUNGSVORRICHTUNG
SUIVEUR SOLAIRE À AXE UNIQUE COMPORTANT UN DISPOSITIF D'AMORTISSEMENT DE VIBRATIONS DE TORSION

(30) Priority: 06.08.2018 EP 18382596
(43) Date of publication of application: 16.06.2021
(73) Proprietor: Soltec Energías Renovables, SL, 30500 Molina de Segura (Murcia) (ES)
(72) Inventor: CHAOUKI ALMAGRO, Samir, 28943 Fuenlabrada (ES); PAJARÓN SANTOS, Pablo, 30007 Murcia (ES); MORALES TORRES, Raul, 30500 Molina de Segura (ES); SÁNCHEZ PÉREZ, Juan Francisco, 30103 Raiguero-La Villa (Beniel) (ES); CASTRO RODRÍGUEZ, Enrique, 30205 Cartagena (ES)
(74) Representative: Isern Patentes y Marcas S.L.
(86) International application number: PCT/EP2019/070999
(87) International publication number: WO 2020/030579

(56) References cited:
- WO-A2-2010/084175
- US-A1- 2008 308 091
- US-A1- 2017 179 872
- US-A1- 2017 227 080
- US-A1- 2018 013 380

## Description

### Technical field

The present invention relates in general to a single axis solar tracker with a torsional vibration damping device, and more in particular to a single axis solar tracker having a damping device configured for damping torsional vibrations caused by the wind.

### State of the art

Single axis solar trackers are known having a fixed structure and a pivoting assembly. The pivoting assembly has pivoting frame and a solar panel array arranged thereon. The pivoting frame is rigidly attached to a rotating shaft having a longitudinal axis, and the rotating shaft is rotatingly supported on two or more support elements of the fixed structure, thereby the pivoting assembly can rotate together with the rotating shaft about the longitudinal axis. The pivoting assembly is driven by a motor-reducer assembly to rotate with respect to the fixed structure to follow the relative movement of the sun.

The motor-reducer assembly is supported on a motor support element pertaining to the support elements and is connected to a motor connection point of the rotating shaft adjacent to the motor support element. The reducer of the motor-reducer assembly is in general irreversible, for example by comprising a worm screw connected to the motor and meshed with a gear wheel connected to the rotating shaft so that the worm screw can rotate the gear wheel but the gear wheel cannot rotate the worm screw. As a result, the motor-reducer assembly provides mechanical retention against torsional vibration of the rotating shaft at the motor connection point.

The pivoting assembly, which often has relatively large dimensions, is prone to undergo rotational vibration produced by the wind. As the motor-reducer assembly provides retention against torsional vibration of the rotating shaft at the motor connection point, but the torsional rigidity of the rotating shaft allows an oscillating torsional vibration which rises along the rotating shaft as the distance from the motor connection point increases.

The pivoting assembly including the pivoting frame, the solar panels and the rotating shaft has a natural frequency of vibration. When the pivoting assembly vibrates with its own natural frequency, it falls into resonance, meaning that it oscillates with the largest amplitude at the same excitation force, and this can produce damages to the solar tracker. The occurrence of this torsional vibration in resonance is known in the art of solar trackers as "aeroelastic vibration", "galloping" or "flutter".

Document WO 2017046429 A1 describes a single-axis solar tracker having the above-mentioned features, wherein the reducer of the motor-reducer assembly that drives the rotation of the pivoting assembly has a motor-driven worm screw meshed with a gear wheel coaxially fixed to the rotating shaft, and wherein electrical cables are installed in a hollow interior of the rotating shaft and passed through a central opening of the gear wheel.

Document US 20170227080 A1 discloses a torsional damping device for stabilizing a structure exposed to wind such as a solar tracker. The torsional damping device comprises a housing for mounting to a structure experiencing a rotational force such as a pivoting assembly of a single axis solar tracker, an inertial body coupled to the housing so as to rotate about an axis, a biasing mechanism configured to bias the inertial body towards a neutral position, and a damping element configured to damp motion of the inertial body relative to the housing. The damping element can comprise a viscous fluid filling voids between the inertial body and the housing. A drawback of this torsional damping device is that the housing has to be attached to the rotation shaft of the pivoting assembly with the axis of the inertial body coaxial to the axis of the rotation shaft.

Document US 2017219045 A1 discloses a magnetic damper for vibration absorbers in machines and installations, particularly wind turbines. The magnetic damper comprises a ring with magnet elements attached thereto and a core slidably inserted into the ring. The damping provided by the magnetic damper occurs by magnetically generated Foucault currents. A simple pendulum is connected to the magnetic dampers and to the installation that is exposed to vibratory forces.

Document US 2018013380 A1 discloses a dynamic stabilizer for solar trackers including a damper, such as a gas spring, and an actuator able to lock the damper. The dynamic stabilizer is controlled from an external control unit that receives information from a plurality of sensors including environ sensors that can detect wind speed, wind direction, weather conditions (such as snow prediction), and vibration and/or displacement sensors. The dynamic stabilizer can provide a flexible movement and/or damping state during normal operation of the solar tracker and/or a rigid or locked state whereby the dynamic stabilizer acts as a restraint for the movements of the solar tracker.

Document WO 2010084175 A2 describes a method and a device for controlling the translation speed, the rotational speed, and the frequency and/or the amplitude of linear, rotational, and pendulum oscillations of components made of electrically conductive, non-ferromagnetic material by means of magnetic fields. The device comprises components which are guided by at least two magnetic fields. The magnetic fields are arranged one behind the other in the direction of motion of the components and have a constant, opposing polarity, in such a way that the magnetic field lines penetrate the cross-section of the components transversely and opposing voltages are induced in the components by the magnetic field lines. At least three Foucault current fields that lie one behind the other are produced in the components by the mentioned voltages, and Lorentz forces are produced by the interaction of the magnetic fields and the Foucault currents. The translation speed, the rotational speed, or the frequency and/or the amplitude of the linear, rotational, and pendulum oscillations of the components are controlled by the Lorentz forces according to the magnetic field strengths.

Document US 2008308091 A1 discloses solar tracker comprising a fixed structure comprising a plurality of support elements rotationally supporting a rotating shaft at a plurality of support points distributed therealong, a pivoting assembly fixedly connected to the rotating shaft and having solar panels arranged to receive solar radiation, a motor-reducer assembly operatively connected to rotate the rotating shaft about a longitudinal axis thereof so as to track the sun, and a torsional vibration damping device having one moving member rigidly connected to the rotating shaft to move therewith. The motor-reducer assembly is cinematically connected to the rotating shaft at a motor connection point, and the motor-reducer assembly has an irreversible reducer which provides retention against torsional vibration of the rotating shaft at the motor connection point.

Document US 2017179872 A1 discloses a solar tracker that uses its orientation motor to dampen the tracker's oscillatory behavior in cooperation with the usage of additional sensors and a controller in order to detect the oscillation of the tracker and to provide a countermeasure.

### Disclosure of the invention

The present invention contributes to solving the problem of aeroelastic vibrations by providing a solar tracker with a torsional vibration damping device, wherein the solar tracker comprises a rotating shaft having a longitudinal axis, a pivoting assembly fixedly connected to the rotating shaft, the pivoting assembly having solar panels arranged to receive solar radiation, a fixed structure including a plurality of support elements rotationally supporting the rotating shaft at a plurality of support points distributed there along, a motor-reducer assembly operatively connected to rotate the rotating shaft about the longitudinal axis so as to track the sun, and a torsional vibration damping device having one moving member rigidly connected to the rotating shaft to move therewith and a stationary member rigidly attached to the fixed structure.

The motor-reducer assembly is cinematically connected to the rotating shaft at a motor connection point and has an irreversible reducer which provides retention against torsional vibration of the rotating shaft at the motor connection point.

The moving member of the torsional vibration damping device is rigidly connected to the rotating shaft at a damper connection point spaced apart from the motor connection point and arranged to move close to the stationary member without contact.

One member selected between the moving member and the stationary member comprises magnetic field-generating elements and the other member selected between the moving member and the stationary member comprises a section made of an electrically conductive, non-ferromagnetic material. Relative movement between the magnetic field-generating elements and the section made of an electrically conductive, non-ferromagnetic material produces a damping torque by Foucault currents effect which is applied to the rotating shaft and dampers the aeroelastic torsional vibration thereof.

With this construction, the torsional vibration of the rotating shaft produced by the wind is prevented by the motor-reducer assembly at the motor connection point and dampened by the torsional vibration damping device at the damper connecting point.

It will be understood that the further away the damper connecting point is from the motor connection point and the nearer they are to the ends of the rotating shaft, the better is the dampening effect achieved by the torsional vibration damping device.

In one embodiment, the motor connection point and the damper connecting point are respectively located at or near to opposite ends of the rotating shaft. In another embodiment, the motor connecting point is located in an intermediate middle section of the rotating shaft and the solar tracker includes two torsional vibration damping devices according to the invention and their respective damper connection points are located at or near to the opposite ends of the rotating shaft. Obviously, the solar tracker can include more than two torsional vibration damping devices if considered necessary.

In a preferred embodiment, the motor-reducer assembly is supported on a motor support element of the plurality of support elements, the motor connection point is located adjacent to the motor support element, the stationary member of the or each damping device is supported on a damper support element of the plurality of support elements, and one or more simple support elements of the plurality of support elements are located between the motor support element and the or each damper support element.

As far as the torsional vibration damping device is concerned, the stationary member comprises a stationary damper section and the moving member comprises a moving damper section.

In one embodiment, the magnetic field-generating elements are attached to the stationary damper section of the stationary member and the section made of an electrically conductive, non-ferromagnetic material is the moving damper section of the moving member.

For example, the stationary damper section comprises two opposite walls perpendicular to the longitudinal axis and made of a ferromagnetic material, for example in a non-limitative way, iron, cobalt, nickel or alloys thereof, and the magnetic field-generating elements are permanent magnets attached to one of the opposite walls forming one single arched row or are permanent magnets attached to both opposite walls forming two respective arched rows facing each other.

In the case of one single arched row of permanent magnets is provided, the permanent magnets have front surfaces laying in a plane parallel to the opposite walls and a damping gap is provided between the front surfaces of the permanent magnets and the wall opposite thereto. In the case of two facing arched rows of permanent magnets are provided, the permanent magnets of the two arched rows have front surfaces laying in two respective planes parallel to the opposite walls, and a damping gap is provided between the front surfaces of the permanent magnets of the two facing arched rows. In any case, the moving damper section is plate-shaped, has opposite surfaces perpendicular to the longitudinal axis and is inserted so that it can move in the damping gap.

Inversely, in another embodiment, the magnetic field-generating elements are permanent magnets attached to the moving damper section of the moving member and the section made of an electrically conductive, non-ferromagnetic material is the stationary damper section of the stationary member.

For example, the stationary damper section comprises two opposite walls perpendicular to the longitudinal axis and made of an electrically conductive, non-ferromagnetic material, such as aluminium, cooper, or alloys thereof, and a damping gap is provided between the two opposite walls. The moving damper section is plate-shaped and has opposite surfaces perpendicular to the longitudinal axis, and the magnetic field-generating elements are permanent magnets lodged in openings provided in the moving damper section forming one single arched row or permanent magnets attached to both opposite surfaces of the moving damper section forming two respective arched rows. In any case, the permanent magnets have opposite front surfaces laying in two respective planes parallel to the opposite surfaces of the moving damper section, and the moving damper section with the permanent magnets is inserted so that it can move in the damping gap.

In any case, the plate-shaped moving damper section has preferably arched top and bottom edges and the opposite walls of the stationary damper section have respective arched top and bottom edges and are connected to one another by an arched bottom wall.

In a preferred embodiment, the moving member has an arm connecting the moving damper section to a shaft fastening element fastened to the rotating shaft, and the stationary member has a base support connecting the stationary damper section to a post fastening element fastened to the damper support element.

### Brief description of the drawings

The above and other features and advantages will be more fully understood from the following detailed description of merely illustrative and non-limiting embodiments with reference to the accompanying drawings, in which:
Fig. 1 is a diagrammatic elevation view of a solar tracker with a torsional vibration damping device according to an embodiment of the present invention;
Fig. 2 is a diagrammatic elevation partial view of the torsional vibration damping device included in the solar tracker of Fig. 1;
Fig. 3 is a cross-sectional view taken along the plane III-III of Fig. 2;
Fig. 4 is a diagrammatic elevation partial view of a torsional vibration damping device according to an alternative embodiment;
Fig. 5 is a cross-sectional view taken along the plane V-V of Fig. 4;
Fig. 6 is a diagrammatic elevation partial view of a torsional vibration damping device according to another alternative embodiment;
Fig. 7 is a cross-sectional view taken along the plane VII-VII of Fig. 6;
Fig. 8 is a diagrammatic elevation partial view of a torsional vibration damping device according to still another alternative embodiment;
Fig. 9 is a cross-sectional view taken along the plane IX-IX of Fig. 8;
Fig. 10 is a diagrammatic elevation view of a solar tracker with a torsional vibration damping device according to an alternative embodiment of the present invention;
Fig. 11 is a diagrammatic elevation partial view of a torsional vibration damping device according to another alternative embodiment; and
Fig. 12 is a cross-sectional view taken along the plane XI-XI of Fig. 11.

### Detailed description of illustrative embodiments

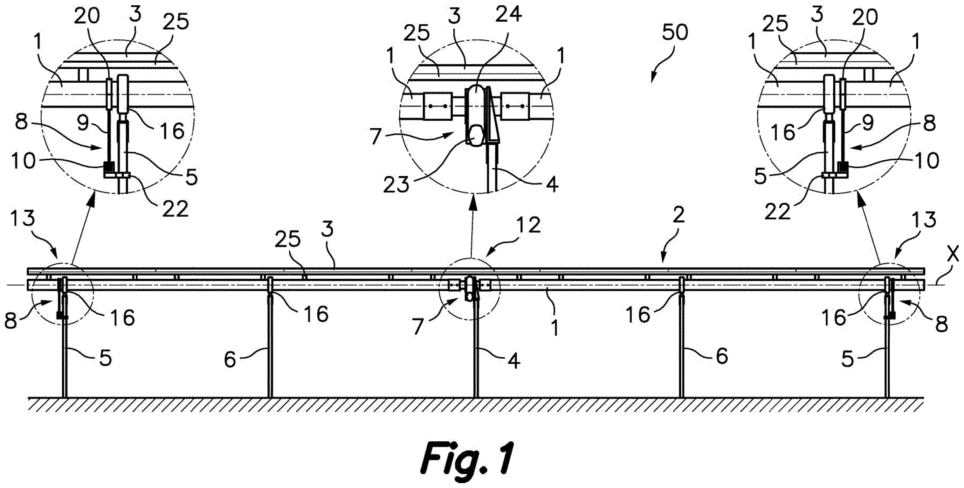

Referring first to Fig. 1, reference sign 50 generally designates a solar tracker with a torsional vibration damping device according to an embodiment of the present invention. The solar tracker 50 is a single axis solar tracker comprising a rotating shaft 1 which has a longitudinal axis X. The rotating shaft 1 is rotationally supported at a plurality of support points distributed there along by a plurality of support elements 4, 5, 6 constituting a fixed structure. A pivoting assembly 2 is fixedly connected to the rotating shaft 1. The pivoting assembly 2 has one or more pivoting frames 25 attached to the rotating shaft 1 and a plurality of solar panels 3 arranged on the one or more pivoting frames 25 to receive solar radiation.

In the shown embodiment, the support elements 4, 5, 6 are individual support posts anchored to the ground although alternatively they could be part of a base structure anchored to the ground.

The rotating shaft 1 extends along the one or more pivoting frames 25 and has opposite ends and an intermediate middle region. The plurality of support elements 4, 5, 6 comprises a motor support element 4 located at the intermediate middle region of the rotating shaft 1, two damper support elements located near the opposite ends of the rotating shaft 1, respectively, and one more simple support element 6 located between the motor support element 4 and each damper support element 5.

A motor-reducer assembly 7 is supported on the motor support element 4. The motor-reducer assembly 7 comprises an electric motor 23 connected to a reducer 24 which in turn is connected to the rotating shaft 1 at a motor connection point 12 located adjacent to the motor support element 4, so that the motor-reducer assembly 7 is operatively connected to rotate the rotating shaft 1 about the longitudinal axis X so as to track the sun. The reducer 24 is an irreversible reducer which provides retention against torsional vibration to the rotating shaft 1 at the motor connection point 12.

In the illustrated embodiment, the irreversible reducer 24 comprises a motor-driven worm screw meshed with a gear wheel which is coaxially fixed to the rotating shaft 1, wherein the worm screw can rotate the gear wheel, but the gear wheel cannot rotate the worm screw. However, other kinds of well-known irreversible reducers and/or other mechanical connections, including for example roller chains, belts, levers or connecting rods, between the reducer and the motor connection point 12 of the rotating shaft 1 will readily occur to one skilled in the art without departing from the scope of the invention.

Each damper support element 5 and each simple support element 6 is connected at the upper end thereof to a bearing support 16 carrying a bearing 26 mounted around the rotating shaft 1 for supporting the rotating shaft 1 and guiding rotation thereof.

In the embodiment shown in Fig. 1, two torsional vibration damping devices 8 are mounted on the damper support elements 5 and connected to the rotating shaft 1 at respective damper connection points 13 adjacent the corresponding damper support elements 5, so that the damper connection points 13 are located near the opposite ends of the rotating shaft 1 far away from the motor connection point 12. In an alternative embodiment (not shown) the motor support element 4 with the motor-reducer assembly 7 and the motor connection point 12 are located at or near one end of the rotating shaft 1 and one damper support element 5 with a single torsional vibration damping device 8 and a single damper connection point 13 are located at or near the other end of the rotating shaft 1.

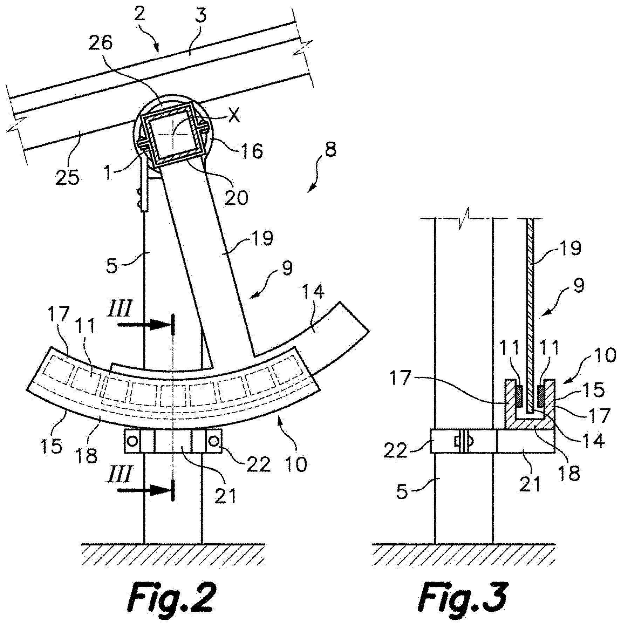

As best shown in Figs. 2 and 3, each torsional vibration damping device 8 comprises a moving member 9 rigidly connected to the rotating shaft 1 and a stationary member 10 rigidly attached to the corresponding damper support element 5. The moving member 9 has a moving damper section 14 connected by an arm 19 to a shaft fastening element 20, such as a shaft clamp, which is fastened to the rotating shaft 1 at a damper connection point 13 adjacent the damper support element 5 so that the moving damper section 14 moves with the rotating shaft 1. The stationary member 10 has a stationary damper section 15 connected to a base support 21 which in turn is connected to a post fastening element 22, such as a post clamp, fastened to the damper support element 5, so that stationary damper section 15 remains stationary together with the damper support element 5.

Alternatively, the arm 19 of the moving member 9 can be directly attached to the bearing 26, which is usually comprised of two complementary solid parts made of a low friction plastic material. The stationary damper section 15 can be alternatively connected to the bearing support 16.

The stationary damper section 15 comprises two opposite walls 17 perpendicular to the longitudinal axis X, which are made of a ferromagnetic material, for example, in a non-limitative way, iron, cobalt, nickel or alloys thereof. The opposite walls 17 have respective arched top and bottom edges and are connected to one another by an arched bottom wall 18. The moving damper section 14 of the moving member 9 is made of an electrically conductive, non-ferromagnetic material, for example aluminium, cooper, or alloys thereof. The moving damper section 14 is plate-shaped, has opposite surfaces perpendicular to the longitudinal axis X and arched top and bottom edges.

The magnetic field-generating elements 11 are permanent magnets 27 attached to both opposite walls 17 of the stationary damper section 15 forming two respective arched rows facing each other and rows having a centre in the longitudinal axis X. Each permanent magnet of one arched row is directly facing a permanent magnet of the other arched row. In an alternative embodiment (not shown), the magnetic field-generating elements 11 are electromagnets 28 energized with electrical current that can be generated for example by the solar panels 3 instead of permanent magnets 27.

As best shown in Fig. 2, the permanent magnets 27 of the two arched rows have front surfaces laying in two respective planes parallel to the opposite walls 17 and therefore perpendicular to the longitudinal axis X. Between the front surfaces of the permanent magnets 27 of the two arched rows a damping gap is provided. The moving damper section 14 of the moving member 9 is inserted so that it can move in the damping gap close to the magnetic field-generating elements 11 without contact.

Relative movement between the permanent magnets 27 constituting the magnetic field-generating elements 11 and the moving damper section 14 made of an electrically conductive, non-ferromagnetic material produces a damping torque by Foucault currents effect which counteracts the effect of torsional vibration of the pivoting assembly 2 produced by the wind or by other causes.

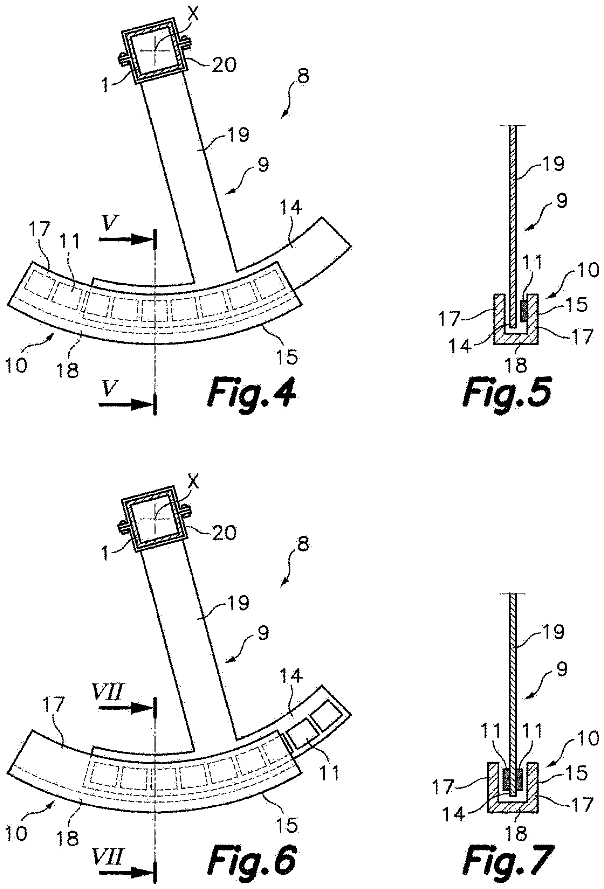

Figs. 4 and 5 show an alternative embodiment which is a variant of that described above in relation to Figs. 2 and 3. The embodiment shown in Figs. 4 and 5 differs from Figs. 2 and 3 in that the permanent magnets 27 constituting the magnetic field-generating elements 11 are attached to only one of the opposite walls 17 forming one arched row rows having a centre in the longitudinal axis X. The permanent magnets 27 have front surfaces laying in a plane parallel to the opposite walls 17, and the damping gap is provided between the front surfaces of the permanent magnets 27 and the wall opposite thereto. The plate-shaped moving damper section 14 of the moving member 9 is inserted so that it can move in the damping gap close to the magnetic field-generating elements 11 without contact.

Alternative embodiments shown in Figs. 6-7 and 8-9 are inverse constructions to those described above with reference to Figs. 2-3 and 4-5. In the embodiments shown in Figs. 6-7 and 8-9 the magnetic field-generating elements 11 are attached to the moving damper section 14 of the moving member 9 and the stationary damper section 15 of the stationary member 10 is made of an electrically conductive, non-ferromagnetic material.

In Figs. 6 and 7, the stationary damper section 15 of the stationary member 10 comprises two opposite walls 17 perpendicular to the longitudinal axis X. The opposite walls 17 are made of an electrically conductive, non-ferromagnetic material, such as aluminium, cooper, or alloys thereof. The opposite walls 17 have respective arched top and bottom edges and are connected to one another by an arched bottom wall 18. A damping gap is provided between the two opposite walls 17. The stationary damper section 15 is fixedly attached to the damper support element by a post fastening element, such as a post clamp.

The moving damper section 14 is plate-shaped and has opposite surfaces perpendicular to the longitudinal axis X and arched top and bottom edges. The moving damper section 14 is made of a ferromagnetic material, for example, iron, cobalt, nickel or alloys thereof. The magnetic field-generating elements 11 are permanent magnets 27 attached to both opposite surfaces of the moving damper section 14 forming two respective opposite arched rows having a centre in the longitudinal axis X. Each permanent magnet of one arched row is directly opposite to a permanent magnet of the other arched row. The permanent magnets 27 have opposite front surfaces laying in two respective planes parallel to the opposite surfaces of the moving damper section 14. The moving damper section 14 is connected by an arm 19 to a shaft fastening element 20, such as a shaft clamp, which is fastened to the rotating shaft 1. The moving damper section 14 with the permanent magnets 27 is inserted so that it can move in the damping gap without contact.

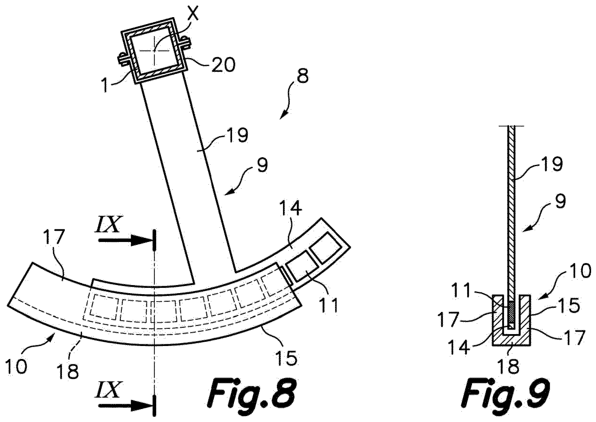

The embodiment shown in Figs. 8 and 9 is a variant of that described above in relation to Figs. 6 and 7. The embodiment shown in Figs. 8 and 9 differs from Figs. 6 and 7 in that the permanent magnets 27 constituting the magnetic field-generating elements 11 are lodged in openings formed in the plate-shaped moving damper section 14. The openings and the permanent magnets 27 form an arched row having a centre in the longitudinal axis X. The permanent magnets 27 have opposite front surfaces laying in two respective planes parallel to the opposite surfaces of the moving damper section 14 at either side of the moving damper section 14. The moving damper section 14 with the permanent magnets 27 is inserted so that it can move in the damping gap.

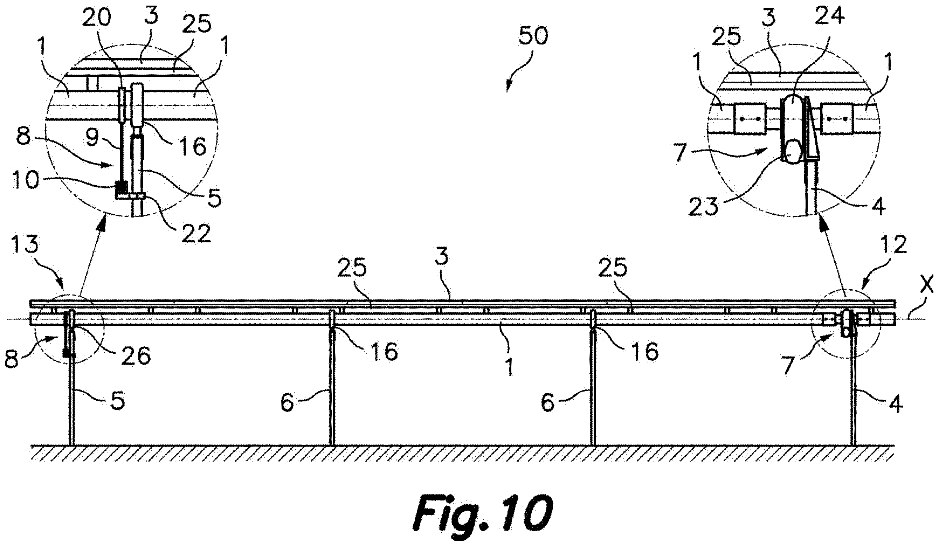

Fig. 10 shows a solar tracker with a torsional vibration damping device according to an alternative embodiment of the present invention which differs from that described above with reference to Fig. 1 in that the solar tracker 50 includes one single torsional vibration damping device 8 in cooperation with the motor-reducer assembly 7. In this embodiment, the rotating shaft 1 has two opposite ends, a motor support element 4 is located at or near to one of the opposite ends of the rotary shaft 1, one damper support element 5 is located at or near to the other end of the rotary shaft 1, and two simple support elements 6 are located between the motor support element 4 and the damper support element 5.

The damper support element 5 and each simple support element 6 are connected at the upper end thereof to a bearing support 16 carrying a bearing 26 mounted around the rotating shaft 1. The motor support element 4 supports a motor-reducer assembly 7 comprising an electric motor 23 connected to an irreversible reducer 24 which in turn is connected to the rotating shaft 1 at a motor connection point 12 located adjacent to the motor support element 4. The damper support element 5 supports a torsional vibration damping device 8 which is connected to the rotating shaft 1 at a damper connection point 13 adjacent the damper support element 5. The torsional vibration damping device 8 may be, for example, according to any one of the embodiments described with reference to Figs. 2-9.

With this construction, the motor connection point 12 is located at or near to one of the opposite ends of the rotary shaft 1 and the damper connection point 13 is located at or near to the other end of the rotary shaft 1.

It will be understood that in any of the embodiments of the solar tracker 50, the number of support elements 6 located between the motor support element 4 and the or each damper support element 5 is variable, and that additional torsional vibration damping devices 8 can be associated to one or more of the support elements 6 located between the motor support element 4 and the or each damper support element 5.

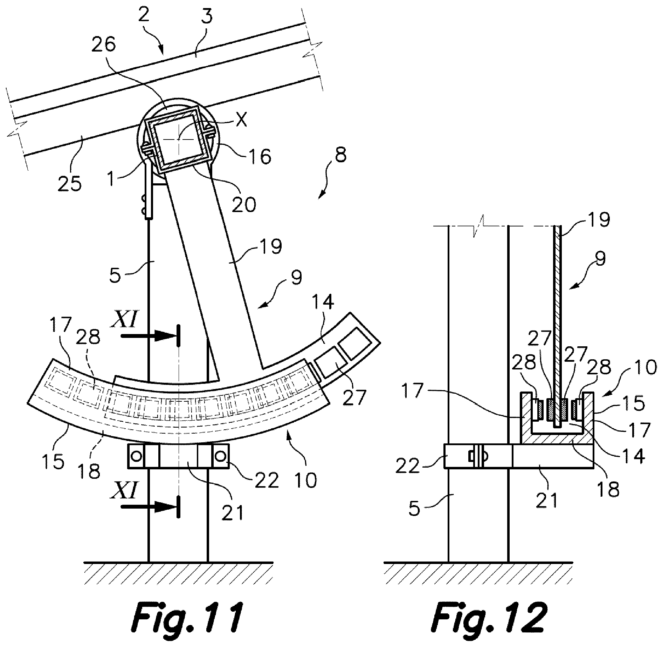

The embodiment shown in Figs. 11 and 12 refer to an alternative embodiment of the torsional vibration damping device in which the moving member 9 has a moving damper section 14 connected by an arm 19 to the shaft 1 and the stationary member 10 has a stationary damper section 15 connected to a base support 21 which in turn is connected to a post fastening element 22, as in the previous embodiments of Figs. 2 to 9.

As a differential characteristic of this of this embodiment the moving damper section 14 of the moving member 9 comprises permanent magnets 27 and the stationary damper section 15 of the stationary member 10 includes electromagnets 28, so that a movement of the arm 19 with the permanent magnets 27 as a consequence of the turns of the rotating shaft 1 with regard to the electromagnets 28 that are activated produces an interference between the magnetic fields (permanent magnets 27 and electromagnets 28) resulting in a damping torque on the rotating shaft 1, as the movement of the arm 9 is slowed down counteracting the torsional galloping effect on said rotating shaft 1.

The electromagnets 28 can be feed from an external source under control in a possible embodiment of a control unit which detects the torsional galloping effect on said rotating shaft 1 and proceed to activation of the electromagnets 28. In an alternative preferred embodiment the electromagnets 28 operate in a bidirectional mode charging an electrical power storage system implemented in a possible embodiment by a capacitor bank (not represented in the drawings) connected to said electromagnets 28 when a torsional galloping occurs at the solar tracker and said electromagnets 28 are later in an automatic way electrically feeded by a discharge of said electrical power storage system when said torsional galloping is higher than a given threshold value, under control for example of the cited control unit.

The control method to activate the cited electromagnets 28 can be very diverse, as for example: activation of a DIAC when there is a voltage in the electrical power storage system, a microcontroller with an accelerometer, a microswitch, optical, magnetic switches, inclination switches, etc.

In any of the embodiments of the torsional vibration damping device described above, the arched top and bottom edges of the plate-shaped moving damper section 14 as well as the arched top and bottom edges of the opposite walls and the arched bottom wall of the stationary damper section 15 preferably have a centre in the longitudinal axis X.

The scope of the invention is defined by the attached claims.

## Claims

1. A solar tracker with a torsional vibration damping device, comprising:
a rotating shaft (1) having a longitudinal axis (X);
a pivoting assembly (2) fixedly connected to the rotating shaft (1), the pivoting assembly (2) having solar panels (3) arranged to receive solar radiation;
a fixed structure comprising a plurality of support elements (4, 5, 6) rotationally supporting the rotating shaft (1) at a plurality of support points distributed there along;
a motor-reducer assembly (7) operatively connected to rotate the rotating shaft (1) about the longitudinal axis (X) so as to track the sun, the motor-reducer assembly (7) being cinematically connected to the rotating shaft (1) at a motor connection point (12) and having an irreversible reducer (24) configured to provide retention against torsional vibration of the rotating shaft (1) at the motor connection point (12); and
a torsional vibration damping device (8) having one moving member (9) rigidly connected to the rotating shaft (1) to move therewith;
**characterized in that**:
the torsional vibration damping device (8) further comprises a stationary member (10) which is rigidly attached to the fixed structure;
the moving member (9) of the torsional vibration damping device (8) is rigidly connected to the rotating shaft (1) at a damper connection point (13) spaced apart from the motor connection point (12) and arranged to move close to the stationary member (10) without contact; and
both the moving member (9) and the stationary member (10) comprises elements capable to generate a magnetic field when a movement of the moving member (9) relative to the stationary member (10) occurs, resulting in a damping torque on the rotating shaft (1).

2. The solar tracker according to claim 1, wherein one member selected between the moving member (9) and the stationary member (10) comprises permanent magnets (27) and the other member selected between the moving member (9) and the stationary member (10) comprises electromagnets (28), so that a relative movement between permanent magnets (27) and electromagnets (28) in one or in the other member (9, 10) produces the damping torque on the rotating shaft.

3. The solar tracker according to claim 2, wherein said electromagnets (28) are fed from an external source.

4. The solar tracker according to claim 2, wherein said electromagnets (28) operate in a bidirectional mode charging an electrical power storage system connected to said electromagnets (28) when a torsional galloping occurs at the solar tracker and said electromagnets (28) being electrically fed by a discharge of said electrical power storage system when said torsional galloping is higher than a given threshold value.

5. The solar tracker according to claim 1, wherein one of the moving member (9) and the stationary member (10) comprises magnetic field-generating elements (11) and the other member selected between the moving member (9) and the stationary member (10) comprises a section made of an electrically conductive, non-ferromagnetic material, relative movement between the magnetic field-generating elements (11) and the section made of an electrically conductive, non-ferromagnetic material producing the damping torque by Foucault currents effect and subsequent magnetic field.

6. The solar tracker according to claim 5, wherein the magnetic field-generating elements (11) are attached to a stationary damper section (15) comprised in the stationary member (10) and the section made of an electrically conductive, non-ferromagnetic material is a moving damper section (14) comprised in the moving member (9).

7. The solar tracker according to claim 5, wherein the magnetic field-generating elements (11) are attached to a moving damper section (14) comprised in the moving member (9) and the section made of an electrically conductive, non-ferromagnetic material is a stationary damper section (15) comprised in the stationary member (10).

8. The solar tracker according to claim 2, wherein the electromagnets (28) are placed at the stationary damper section (15) comprised in stationary member (10) and a moving damper section (14) comprised in the moving member (9) further includes permanent magnets (27).

9. The solar tracker according to claim 1, wherein the rotating shaft (1) has opposite ends and an intermediate middle region, the motor connection point (12) is located at or near to one of the opposite ends of the rotary shaft (1), and the damper connection point (13) is located at or near to the other end of the rotary shaft (1).

10. The solar tracker according to claim 1, wherein the rotating shaft (1) has opposite ends and an intermediate middle region, wherein and the motor connection point (12) is located in the intermediate middle region, the damper connection point (13) is located at or near to one of the opposite ends of the rotary shaft (1), and a second torsional vibration damping device is provided having a stationary member (10) rigidly attached to the fixed structure and a moving member (9) rigidly connected to the rotating shaft (1) at a second damper connection point (13) located at or near to the other end of the rotating shaft (1) and arranged to move close to the corresponding stationary member (10) without contact.

11. The solar tracker according to claim 1, wherein the motor-reducer assembly (7) is supported on a motor support element (4) of the plurality of support elements (4, 5, 6), the motor connection point (12) is located adjacent to the motor support element (4), the stationary member (10) of the or each torsional vibration damping device (8) is supported on a damper support element (5) of the plurality of support elements (4, 5, 6).

12. The solar tracker according to claim 11, wherein one or more simple support elements (6) of the plurality of support elements (4, 5, 6) are located between the motor support element (4) and the or each damper support element (5).

13. The solar tracker according to any of the claims 6 to 8, wherein the stationary damper section (15) comprises two opposite walls (17) perpendicular to the longitudinal axis (X) connected to one another by a bottom wall (18), a damping gap being provided between the opposite walls (17), wherein the opposite walls (17) of the stationary damper section (15) have respective arched top and bottom edges, and wherein the moving damper section (14) has arched top and bottom edges.

14. The solar tracker according to claim 13 wherein the moving damper section (14) is connected by an arm (19) to a shaft fastening element (20) fastened to the rotating shaft (1) and the stationary damper section (15) is connected by a base support (21) to a post fastening element (22) fastened to the damper support element (5).

15. The solar tracker according to claim 4, wherein said electrical power storage system is a capacitor bank.

## Patentansprüche

1. Sonnenverfolger mit Torsionsschwingungsdämpfungsvorrichtung, umfassend:
eine Drehwelle (1) mit einer Längsachse (X);
eine fest mit der Drehwelle (1) verbundene Schwenkbaugruppe (2), wobei die Schwenkbaugruppe (2) zur Aufnahme von Sonnenstrahlung angeordnete Solarmodule (3) aufweist;
eine unbewegliche Konstruktion mit einer Vielzahl von Trägerelementen (4, 5, 6), auf denen die Drehwelle (1) an einer Vielzahl von entlang dieser verteilten Lagerpunkten drehbar gelagert ist;
eine Motor-Getriebe-Baugruppe (7), die funktionell so angeschlossen ist, dass die Drehwelle (1) zwecks Verfolgung der Sonne um die Längsachse (X) gedreht wird, wobei die Motor-Getriebe-Baugruppe (7) an einem Motoranschlusspunkt (12) kinematisch mit der Drehwelle (1) verbunden ist und ein nicht umkehrbares Getriebe (24) aufweist, das dazu ausgelegt ist, die Drehwelle (1) an dem Motoranschlusspunkt (12) gegen Torsionsschwingungen zu sichern; und
eine Torsionsschwingungsdämpfungsvorrichtung (8) mit einem beweglichen Element (9), das zur gemeinsamen Bewegung mit der Drehwelle (1) starr mit dieser verbunden ist;
**dadurch gekennzeichnet, dass:**
die Torsionsschwingungsdämpfungsvorrichtung (8) ferner ein starr mit der ortsfesten Konstruktion verbundenes unbewegliches Element (10) umfasst;
das bewegliche Element (9) der Torsionsschwingungsdämpfungsvorrichtung (8) an einem vom Motoranschlusspunkt (12) beabstandeten Dämpferanschlusspunkt (13) starr mit der Drehwelle (1) verbunden und so angeordnet ist, dass es sich berührungslos dicht an dem unbeweglichen Element (10) bewegt; und
sowohl das bewegliche Element (9) als auch das unbewegliche Element (10) Elemente umfassen, die bei einer Bewegung des beweglichen Elements (9) relativ zum unbeweglichen Element (10) ein Magnetfeld erzeugen können und so ein Dämpfungsmoment auf die Drehwelle (1) ausüben.

2. Sonnenverfolger nach Anspruch 1, wobei ein zwischen dem beweglichen Element (9) und dem unbeweglichen Element (10) ausgewähltes Element Dauermagnete (27) und das andere zwischen dem beweglichen Element (9) und dem unbeweglichen Element (10) ausgewählte Element Elektromagnete (28) umfasst, sodass eine Relativbewegung zwischen Dauermagneten (27) und Elektromagneten (28) in dem einen bzw. dem anderen Element (9, 10) das auf die Drehwelle wirkende Dämpfungsmoment erzeugt.

3. Sonnenverfolger nach Anspruch 2, wobei die genannten Elektromagnete (28) von einer externen Quelle gespeist werden.

4. Sonnenverfolger nach Anspruch 2, wobei die genannte Elektromagnete (28) bidirektional arbeiten und beim Auftreten von Torsionsschwingungen am Sonnenverfolger ein an die genannte Elektromagnete (28) angeschlossenes Elektroenergiespeichersystem aufladen und wobei die genannten Elektromagnete (28) durch eine Entladung des genannten Elektroenergiespeichersystems elektrisch gespeist werden, wenn die genannten Torsionsschwingungen einen bestimmten Schwellenwert überschreiten.

5. Sonnenverfolger nach Anspruch 1, wobei entweder das bewegliche Element (9) oder das unbewegliche Element (10) magnetfelderzeugende Elemente (11) umfasst und das andere zwischen dem beweglichen Element (9) und dem unbeweglichen Element (10) ausgewählte Element einen Bereich aus einem elektrisch leitfähigen, nicht ferromagnetischen Material umfasst, wobei eine Relativbewegung zwischen den magnetfelderzeugenden Elementen (11) und dem Bereich aus einem elektrisch leitfähigen, nicht ferromagnetischen Material aufgrund eines Wirbelstromeffekts und des sich daraus ergebenden Magnetfelds das Dämpfungsmoment erzeugt.

6. Sonnenverfolger nach Anspruch 5, wobei die magnetfelderzeugenden Elemente (11) an einem in dem unbeweglichen Element (10) enthaltenen unbeweglichen Dämpfungsbereich (15) angebracht sind und der aus einem elektrisch leitfähigen, nicht ferromagnetischen Material bestehende Bereich ein in dem beweglichen Element (9) enthaltener beweglicher Dämpfungsbereich (14) ist.

7. Sonnenverfolger nach Anspruch 5, wobei die magnetfelderzeugenden Elemente (11) an einem in dem beweglichen Element (9) enthaltenen beweglichen Dämpfungsbereich (14) angebracht sind und der aus einem elektrisch leitfähigen, nicht ferromagnetischen Material bestehende Bereich ein in dem unbeweglichen Element (10) enthaltener unbeweglicher Dämpfungsbereich (15) ist.

8. Sonnenverfolger nach Anspruch 2, wobei die Elektromagnete (28) in dem im unbeweglichen Element (10) enthaltenen unbeweglichen Dämpfungsbereich (15) angeordnet sind und ein im beweglichen Element (9) enthaltener beweglicher Dämpfungsbereich (14) außerdem Dauermagnete (27) umfasst.

9. Sonnenverfolger nach Anspruch 1, wobei die Drehwelle (1) entgegengesetzte Enden und einen dazwischenliegenden Mittelbereich aufweist, der Motoranschlusspunkt (12) an oder nahe einem der entgegengesetzten Enden der Drehwelle (1) angeordnet ist und der Dämpferanschlusspunkt (13) an oder nahe dem anderen Ende der Drehwelle (1) angeordnet ist.

10. Sonnenverfolger nach Anspruch 1, wobei die Drehwelle (1) entgegengesetzte Enden und einen dazwischenliegenden Mittelbereich aufweist, wobei der Motoranschlusspunkt (12) in dem dazwischenliegenden Mittelbereich angeordnet ist, und der Dämpferanschlusspunkt (13) an oder nahe einem der entgegengesetzten Enden der Drehwelle (1) angeordnet ist, und eine zweite Torsionsschwingungsdämpfungsvorrichtung vorgesehen ist, die ein unbewegliches Element (10), das starr an der ortsfesten Konstruktion angebracht ist, und ein bewegliches Element (9) umfasst, welches an einem zweiten Dämpferanschlusspunkt (13) an oder nahe dem anderen Ende der Drehwelle (1) starr mit der Drehwelle (1) verbunden und so angeordnet ist, dass es sich berührungslos dicht an dem unbeweglichen Element (10) bewegt.

11. Sonnenverfolger nach Anspruch 1, wobei die Motor-Getriebe-Baugruppe (7) auf einem Motorträgerelement (4) der Vielzahl von Trägerelementen (4, 5, 6) gelagert ist, der Motoranschlusspunkt (12) neben dem Motorträgerelement (4) angeordnet ist und das unbewegliche Element (10) der oder einer jeden Torsionsschwingungsdämpfungsvorrichtung (8) auf einem Dämpferträgerelement (5) der Vielzahl von Trägerelementen (4, 5, 6) gelagert ist.

12. Sonnenverfolger nach Anspruch 11, wobei zwischen dem Motorträgerelement (4) und dem oder einem jeden Dämpferträgerelement (5) ein oder mehrere einfache Trägerelemente (6) der Vielzahl von Trägerelementen (4, 5, 6) angeordnet sind.

13. Sonnenverfolger nach einem der Ansprüche 6 bis 8, wobei der unbewegliche Dämpfungsbereich (15) zwei sich gegenüberliegende, senkrecht zur Längsachse (X) verlaufende und durch eine Bodenfläche (18) miteinander verbundene Wände (17) aufweist, wobei zwischen den sich gegenüberliegenden Wänden (17) ein Dämpfungsspalt vorgesehen ist, wobei die sich gegenüberliegenden Wände (17) des unbeweglichen Dämpfungsbereichs (15) jeweils eine gewölbte Ober- und Unterkante aufweisen, und wobei der bewegliche Dämpfungsbereich (14) eine gewölbte Ober- und Unterkante aufweist.

14. Sonnenverfolger nach Anspruch 13, wobei der bewegliche Dämpfungsbereich (14) durch einen Arm (19) mit einem an der Drehwelle (1) befestigten Wellenbefestigungselement (20) verbunden ist und der unbewegliche Dämpfungsbereich (15) durch einen Basisträger (21) mit einem an dem Dämpferträgerelement (5) befestigten Ständerbefestigungselement (22) verbunden ist.

15. Sonnenverfolger nach Anspruch 4, wobei das genannte Elektroenergiespeichersystem eine Kondensatorbatterie ist.

## Revendications

1. Un suiveur solaire ayant un dispositif d'amortissement de vibrations par torsion, comportant :
un arbre rotatif (1) ayant un axe longitudinal (X) ;
un ensemble pivotant (2) relié de façon fixe à l'arbre rotatif (1), l'ensemble pivotant (2) ayant des panneaux solaires (3) agencés pour recevoir un rayonnement solaire ;
une structure fixe comportant une pluralité d'éléments de support (4, 5, 6) supportant en rotation l'arbre rotatif (1) à une pluralité de points de support qui y sont distribués tout au long ;
un ensemble motoréducteur (7) relié fonctionnellement pour faire tourner l'arbre rotatif (1) sur l'axe longitudinal (X) de sorte à suivre le soleil, l'ensemble motoréducteur (7) étant relié cinématiquement à l'arbre rotatif (1) à un point de connexion du moteur (12) et ayant un réducteur irréversible (24) configuré pour offrir une rétention contre la vibration par torsion de l'arbre rotatif (1) au point de connexion du moteur (12) ; et
un dispositif d'amortissement de vibrations par torsion (8) ayant un organe mobile (9) relié de façon rigide à l'arbre rotatif (1) pour se déplacer ensemble ;
**caractérisé en ce que** :
le dispositif d'amortissement de vibration par torsion (8) comporte en outre un organe fixe (10) qui est attaché de façon rigide à la structure fixe ;
l'organe mobile (9) du dispositif d'amortissement de vibrations par torsion (8) est relié de façon rigide à l'arbre rotatif (1) à un point de connexion d'amortisseur (13) séparé du point de connexion du moteur (12) et agencé pour se rapprocher de l'organe fixe (10) sans contact ; et
aussi bien l'organe mobile (9) que l'organe fixe (10) comportent des éléments capables de générer un champs magnétique lorsqu'un mouvement de l'organe mobile (9) par rapport à l'organe fixe (10) a lieu, résultant en un couple d'amortissement sur l'arbre rotatif (1).

2. Le suiveur solaire conformément à la revendication 1, où un organe sélectionné entre l'organe mobile (9) et l'organe fixe (10), comporte des aimants permanents (27) et l'autre organe sélectionné entre l'organe mobile (9) et l'organe fixe (10) comporte des électroaimants (28) de sorte qu'un mouvement relatif entre les aimants permanents (27) et les électroaimants (28) dans l'un ou l'autre organe (9, 10) produit le couple d'amortissement sur l'arbre rotatif.

3. Le suiveur solaire conformément à la revendication 2, où ces électroaimants (28) sont alimentés par une source externe.

4. Le suiveur solaire conformément à la revendication 2, où ces électroaimants (28) fonctionnent dans un mode bidirectionnel chargeant un système de stockage d'énergie électrique connecté à ces électroaimants (28) lorsqu'une vibration galopante par torsion a lieu au suiveur solaire et ces électroaimants (28) étant électriquement alimentés par une décharge de ce système de stockage d'énergie électrique lorsque cette vibration galopante par torsion est plus élevée qu'une certaine valeur de seuil.

5. Le suiveur solaire conformément à la revendication 1, où un des organe mobile (9) et organe fixe (10) comporte des éléments générant un champ magnétique (11) et l'autre organe sélectionné entre l'organe mobile (9) et l'organe fixe (10) comporte une section faite en un matériau non ferromagnétique conducteur électrique le mouvement relatif entre les éléments (11) générant le champ magnétique et la section faite en un matériau non ferromagnétique , conducteur électrique produisant le couple d'amortissement par l'effet de courants de Foucault et le champs magnétique subséquent.

6. Le suiveur solaire conformément à la revendication 5, où les éléments générant le champ magnétique (11) sont attachés à une section d'amortisseur fixe (15) comprise dans l'organe fixe (10) et la section faite en un matériau non ferromagnétique, conducteur électrique est une section d'amortisseur mobile (14) comprise dans l'organe mobile (9).

7. Le suiveur solaire conformément à la revendication 5, où les éléments (11) générant le champ magnétique sont attachés à une section d'amortisseur mobile (14) compris dans l'organe mobile (9) et la section faite en un matériau non ferromagnétique, conducteur électrique est une section d'amortisseur fixe (15) compris dans l'organe fixe (10).

8. Le suiveur solaire conformément à la revendication 2, où les électroaimants (28) sont placés dans la section d'amortisseur fixe (15) compris dans l'organe fixe (10) et une section d'amortisseur mobile (14) compris dans l'organe mobile (9) comprend en outre des aimants permanents (27).

9. Le suiveur solaire conformément à la revendication 1, où l'arbre rotatif (1) possède des extrémités opposées et une région médiane intermédiaire, le point de connexion du moteur (12) est situé à ou proche d'une des extrémités opposées de l'arbre rotatif (1), et le point de connexion d'amortisseur (13) est situé à ou proche de l'autre extrémité de l'arbre rotatif (1).

10. Le suiveur solaire conformément à la revendication 1, où l'arbre rotatif (1) possède des extrémités opposées et une région médiane intermédiaire, où et le point de connexion du moteur (12) est situé dans la région médiane intermédiaire, le point de connexion de l'amortisseur (13) est situé à ou proche d'une des extrémités opposées de l'arbre rotatif (1) et une deuxième système d'amortissement de vibrations par torsion est prévu ayant un organe fixe (10) attaché de façon rigide à la structure fixe et un organe mobile (9) relié de façon rigide à l'arbre rotatif (1) à un deuxième point de connexion d'amortisseur (13) situé à ou proche de l'autre extrémité de l'arbre rotatif (1) et agencé pour se rapprocher de l'organe fixe correspondant (10) sans contact.

11. Le suiveur solaire conformément à la revendication 1, où l'ensemble motoréducteur (7) est supporté sur un élément de support de moteur (4) de la pluralité d'éléments de support (4, 5, 6), le point de connexion du moteur (12) est situé adjacent à l'élément (4) de support du moteur, l'organe fixe (10) du ou de chaque dispositif d'amortissement de vibrations par torsion (8) est supporté sur un élément de support (5) d'amortisseur de la pluralité des éléments de support (4, 5, 6).

12. Le suiveur solaire conformément à la revendication 11, où un ou plusieurs éléments de support simples (6) de la pluralité d'éléments de support (4, 5, 6) sont situés entre l'élément de support (4) du moteur et le ou chaque élément de support d'amortisseur (5).

13. Le suiveur solaire conformément à une quelconque des revendications 6 à 8, où la section d'amortisseur fixe (15) comporte deux parois opposées (17) perpendiculaires à l'axe longitudinal (X) reliés entre elles par une paroi inférieure (18), un écart d'amortissement étant prévu entre les parois opposées (17), où les parois opposées (17) de la section d'amortisseur fixe (15) possèdent des bords inférieur et supérieur arqués et où la section d'amortisseur mobile (14) possède des bords supérieur et inférieur arqués.

14. Le suiveur solaire conformément à la revendication 13, où la section d'amortisseur mobile (14) est reliée par un bras (19) à un élément de fixation d'arbre (20) fixé à l'arbre rotatif (1) et la section d'amortisseur fixe (15) est reliée par un support de base (21) à un élément de fixation de mât (22) fixé à l'élément de support d'amortisseur (5).

15. Le suiveur solaire conformément à la revendication 4, où ce système de stockage d'énergie électrique est un banc de condensateurs.
